# EUROPÄISCHE PATENTSCHRIFT

(11) **EP 1 554 327 B1**
(45) Veröffentlichungstag und Bekanntmachung des Hinweises auf die Patenterteilung: **26.03.2008**
(21) Anmeldenummer: 03757902.6
(22) Anmeldetag: 01.10.2003
(51) Int. Cl.: C08G 18/18, C08G 18/66

(54) **ZELLIGE POLYURETHANELASTOMERE, EIN VERFAHREN ZU IHRER HERSTELLUNG UND IHRE VERWENDUNG**
CELLULAR POLYURETHANE ELASTOMERS, METHOD FOR THE PRODUCTION THEREOF, AND USE THEREOF
ELASTOMERES DE POLYURETHANNE CELLULAIRES, LEUR PROCEDE DE PRODUCTION ET LEUR UTILISATION

(30) Priorität: 14.10.2002 DE 10247789
(43) Veröffentlichungstag der Anmeldung: 20.07.2005
(73) Patentinhaber: Bayer MaterialScience AG, 51368 Leverkusen (DE)
(72) Erfinder: BRECHT, Klaus, 51399 Burscheid (DE); HAAS, Peter, 42781 Haan (DE)
(86) Internationale Anmeldenummer: PCT/EP2003/010896
(87) Internationale Veröffentlichungsnummer: WO 2004/035648

(56) Entgegenhaltungen:
- EP-A- 1 182 219
- DE-A- 3 614 188
- DE-A- 19 648 509
- US-A- 4 195 150

## Beschreibung

Die Erfindung betrifft zellige, aminvernetzte Polyurethanelastomere, ein Verfahren zu ihrer Herstellung und ihre Verwendung zur Herstellung von Schuhteilen und Schuhsohlen.

Zur Herstellung von Polyurethan (PUR)-Schaumstoffen mit Elastomereigenschaften werden Polyisocyanate oder Polyisocyanatprepolymere, Polyether- oder Polyesterpolyole, Kettenverlängerer, Treibmittel sowie weitere Additive eingesetzt. Übliche Kettenverlängerer sind solche vom Typ der Glykole, Aminoalkohole oder Diamine. In der EP-A 1 182 219 werden PUR-Formteile für die Anwendung als Schuhsohle beschrieben. Als Kettenverlängerer dienen hier aromatische Diamine, wobei kompakte Formteile erhalten werden. Die Dichte dieser Formteile ist mit 950-1200 kg/m³ sehr hoch. Für bestimmte Anwendungen, wie beispielsweise Schuhsohlen, ist es vorteilhaft, Formteile mit guten Elastomereigenschaften sowie einer Zellstruktur, d.h. einer geringen Rohdichte zu haben. Werden Diaminkettenverlängerer und Wasser als Treibmittel zur Herstellung solcher zelligen Elastomere verwendet, ist die Abstimmung der Treib- und Vernetzungsreaktion überraschend schlecht. Bei Anwesenheit von Wasser werden nahezu kompakte Reaktionsprodukte erhalten. Die Treibreaktion mit Wasser unter Bildung von CO₂ läuft anscheinend in Gegenwart aminischer Komponenten als Kettenverlängerer nur untergeordnet ab.

DE-A1-196 48 509 offenbart PUR-Formulierungen für Schuhsolen mit einer Dichte höher als 800 Kg/m³ . Als Kettenverlängerer werden aromatische Diamine zusammen mit quaternären Ammoniumsalzen eingesetzt.

Aufgabe war es daher, zellige und gleichzeitig aminvernetzte Polyurethanelastomere sowie ein Verfahren zu ihrer Herstellung zur Verfügung zu stellen.

Überraschend wurde gefunden, dass der Ablauf der Treibreaktion mit Wasser und/oder physikalischen Treibmitteln stattfindet, wenn als Kettenverlängerungsmittel aromatische Amine mit mindestens 2 primären Aminogruppen pro Molekül und quaternäre Ammoniumsalze und gegebenenfalls Diole mit Molekulargewichten von ≤ 400 eingesetzt werden. Auf diese Weise ist es möglich, zellige Elastomere zu erzeugen, die z.B. als Schuhsohlen Verwendung finden.

Gegenstand der Erfindung sind zellige, aminvernetzte Polyurethanelastomere mit einer Freischaum-Rohdichte von 250-800 kg/m³ und einer Härte von 45-70 Shore A erhältlich durch Umsetzung von
A) einer oder mehreren Verbindungen aus der Gruppe bestehend aus Polyisocyanaten, Polyisocyanatprepolymeren und modifizierten Polyisocyanaten,
B) einem oder mehreren Polyolen aus der Gruppe bestehend aus Polyether- und Polyesterpolyolen und
C) Kettenverlängerungsmitteln,
in Gegenwart von
D) Wasser und/oder physikalischen Treibmitteln,
E) Katalysatoren und
F) gegebenenfalls zusätzlichen Hilfs- und/oder Zusatzstoffen,
dadurch gekennzeichnet, dass als Kettenverlängerer C)
C1) aromatische Amine mit mindestens 2 primären Aminogruppen pro Molekül und
C2) quaternäre Ammoniumsalze und
C3) gegebenenfalls kurzkettige Diole mit Molekulargewichten von ≤ 400 g/mol, bevorzugt 60 bis 400 g/mol, besonders bevorzugt von 60 bis 150 g/mol, eingesetzt werden.

Besonders bevorzugte aromatische Amine C1) mit mindestens 2 primären Aminogruppen sind z.B. 1,3,5-Triethyl-2,4-diaminobenzol, 1-Methyl-3,5-diethyl-2,6-diaminobenzol, 1-Methyl-3,5-diethyl-2,4-diaminobenzol, 3,5,3',5'-Tetraisopropyl-4,4'-diaminodiphenylmethan und 2,4-Diaminomesitylen.

Die quaternären Ammoniumsalze C2) sind vorzugsweise aus Kationen mit Tetraalkyl-aryl-ammoniumstruktur sowie Anionen, wie z.B. Chlorid, Fluorid, Bromid, Sulfat, Monoalkylsulfat, Arylsulfat, Phosphat, Dialkylphosphat, Monoalkylphosphat, Sulfonat und Phosphonat aufgebaut, z.B.: Trimethylbenzylammoniummethylsulfat, Trimethylbenzylammoniumchlorid, Trimethyloctylammoniumethylsulfat, Tetrabutylammoniumchlorid, Triethylbenzylammoniumdiethylphosphat, Trimethyldodecylammoniumethylsulfat, Dimethylethyldodecylammoniumethylsulfat, Tetraethylammoniumchlorid, Tetrabutylammoniumbromid, Methyltrioctylammoniumchlorid und Tetrabutylammoniumdiethylphosphat.

Die Kettenverlängerer C1) werden vorzugsweise in Mengen von 1 bis 15 Gew.-Teilen, besonders bevorzugt von 2 bis 12 Gew.-Teilen, bezogen auf 100 Gew.-Teile der Summe der Komponenten B), C), D) und E) verwendet.

Die quaternären Ammoniumsalze C2) werden bevorzugt in Mengen von 0,25 bis 12 Gew.-Teilen, besonders bevorzugt in Mengen von 0,5 bis 8 Gew.-Teilen, bezogen auf 100 Gew.-Teile der Summe der Komponenten B), C), D) und E) eingesetzt.

Als Komponente D) wird bevorzugt Wasser in Mengen von 0,01 bis 0,8 Gew.-Teilen, besonders bevorzugt von 0,1 bis 0,6 Gew.-Teilen bezogen auf 100 Gew.-Teile der Komponenten B), C), D) und E) verwendet.

Die zelligen Polyurethanelastomeren haben eine Freischaum-Rohdichte von 250-800 kg/m³ und können zu Formschaumteilen mit einer Rohdichte von 300-900 kg/m³ verdichtet werden. Die Härte der PU-Elastomeren liegt bevorzugt bei 45 bis 70 Shore A.

Als Treibmittel kann jedes physikalische Treibmittel oder Treibmittelgemisch verwendet werden, wie z.B. Treibmittel auf Basis von Kohlenwasserstoffen (wie z.B. Butan, iso-Butan, n-Pentan, iso-Pentan, Cyclopentan, n-Hexan, iso-Hexan, Cyclohexan) Fluorchlorkohlenwasserstoffen (wie z.B. Freon R 141b) und Fluorkohlenwasserstoffen (wie z.B. 134a, R365mfc und R227ea) und deren Gemische. Die Treibmittel können durch polymere Mikrokapseln eingeschlossen sein (treibgasgefüllte, expandierbare Kunststoffhohlkugeln, z.B. gefüllt mit iso-Butan).

Als Komponente B) werden Polyetherpolyole, Polyesterpolyole und Gemische davon eingesetzt. Die Polyetherpolyole enthalten vorzugsweise mindestens 80 % primäre OH-Gruppen und weisen bevorzugt eine OH-Zahl von 18-112 auf.

Die Polyesterpolyole haben vorzugsweise eine OH-Zahl von 28-112.

Als bevorzugte Komponente A) werden Polyisocyanate oder Polyisocyanatprepolymere auf Basis verflüssigter MDI-Produkte (Diisocyanatdiphenylmethan = MDI) eingesetzt.

Die erfindungsgemäßen zelligen, aminvernetzten Polyurethanelastomere haben gegenüber glykolvernetzten Polyurethanelastomeren ausgezeichnete mechanische Eigenschaften über einen erweiterten Gebrauchstemperaturbereich.

Ein weiterer Gegenstand der Erfindung ist ein Verfahren zur Herstellung der erfindungsgemäßen zelligen, aminvernetzten Polyurethanelastomeren, mit einer Freischaum-Rohdichte von 250-800 kg/m³ und einer Härte von 45-70 Shore A wobei
A) eine oder mehrere Verbindungen aus der Gruppe bestehend aus Polyisocyanaten, Polyisocyanatprepolymeren und modifizierte Polyisocyanaten
B) eine oder mehrere Verbindungen aus der Gruppe bestehend aus Polyether-und Polyesterpolyolen,
C) Kettenverlängerer,
   in Gegenwart von
D) Wasser und/oder physikalischen Treibmitteln
E) Katalysatoren und
F) gegebenenfalls zusätzlichen Hilfs- und/oder Zusatzstoffen
umgesetzt werden, welches dadurch gekennzeichnet ist, dass der Kettenverlängerer C) aus aromatischen Aminen mit mindestens 2 primären Aminogruppen pro Molekül (C1), quaternären Ammoniumsalzen (C2) und gegebenenfalls kurzkettigen Diolen mit Molekulargewichten von ≤ 400 g/mol (C3), vorzugsweise 60 bis 400 g/mol, besonders bevorzugt von 60 bis 150 g/mol, besteht.

Die Herstellung der zelligen Polyurethanelastomeren (PUR-Schaumstoffe) kann nach den allgemein bekannten Verfahren, beispielsweise durch Handverarbeitung, mittels Niederdruck- oder bevorzugt Hochdruckmaschinen oder im RIM-Verfahren in offenen oder bevorzugt geschlossenen Formwerkzeugen, beispielsweise metallischen Formwerkzeugen, erfolgen. Dabei können z.B. Schuhsohlen ein- oder mehrschichtig hergestellt und anschließend die entsprechenden Schuhe mittels Direktbesohlungsverfahren gefertigt werden.

Verwendung finden die zelligen Elastomere mit ihren sehr guten Tieftemperatureigenschaften, durch einen sehr niedrigen Glasübergang und ihrer thermischen Beständigkeit bis ca. 160°C im Dauergebrauch z.B. in Schuhsohlenanwendungen. Die Schuhteile, insbesondere Schuhsohlen werden vorzugsweise mit einer 2-Komponenten-Niederdruck- oder -Hochdruckanlage hergestellt.

Die Erfindung soll anhand der nachfolgenden Beispiele näher erläutert werden.

Ausgangsstoffe:
- B 1.: Polyetherpolyol auf der Basis von Propylenglycol als Starter einer OH-Zahl von 28 mit 90 % primären OH-Gruppen durch Addition von 80 % Propylenoxid (PO) und 20 % Ethylenoxid (EO).
- B2.: Polyetherpolyol auf der Basis von Glycerin als Starter einer OH-Zahl von 28 mit 90 % primären OH-Gruppen durch Addition von 83 % PO und 17 % EO.
- B3. -: Polyesterpolyol auf der Basis von Adipinsäure, Ethylenglycol, 1,4-Butandiol der OH-Zahl 56.
- A1.: Polyisocyanat 1), hergestellt durch Umsetzung von 66 Teilen 4,4'-MDI und 5 Teilen modifiziertem MDI mit einem NCO-Gehalt von 30 Gew.-%, hergestellt durch teilweise Carbodiimidisierung und einem Polyolgemisch aus 20 Teilen eines Polyols der OH-Zahl 56 aus Propylenglycol und Propylenoxid sowie 3 Teilen eines Polyols der OH-Zahl 56 aus Trimethylolpropan und Propylenoxid und 6 Teilen Tripropylenglykol, wobei ein NCO-Gehalt von 19,8 % für das Polyisocyanat 1) erhalten wird.
- A2.: Polyisocyanat 2), hergestellt durch Umsetzung von 55 Teilen 4,4'-MDI und 6 Teilen modifiziertem MDI mit einem NCO-Gehalt von 30 Gew.-%, hergestellt durch teilweise Carbodiimidisierung und 39 Teilen eines Polyesterpolyols mit der OH-Zahl 56, wobei ein NCO-Gehalt von 19,0 % für das Polyisocyanat 2) erhalten wird.
- aromatisches Amin C1):: Gemisch aus 80 Gew.-% 2,4-Diamino-3,5-diethyltoluol und 20 Gew.-% 2,6-Diamino-3,5-diethyltoluol
- quaternäres Ammoniumsalz C2):: Dimethylethyldodecylammonium-ethylsulfat
- quaternäres Ammoniumsalz C2'):: Tetrabutylammoniumdiethylphosphat
- DABCO:: 1,4-Diazabicyclo-[2,2,2]-octan
- DBTDL:: Dibutylzinndilaurat
- Stabilisator:: DC 193 der Fa. Air Products

### Verarbeitungsbeispiele

Es wurden die nachfolgenden Formulierungen (Tabelle 1) durch Handverarbeitung umgesetzt:

**Tabelle 1**

| Beispiele | 1(V) | 2* | 3* | 4(V) | 5* | 6(V) | 7* | 8(V) | 9* | 10(V) | 11* |
|---|---|---|---|---|---|---|---|---|---|---|---|
| Komponenten | | | | | | | | | | | |
| Polyether B1 | 71,5 | 71,5 | 71,5 | - | - | - | - | - | - | - | - |
| Polyether B2 | 20 | 20 | 20 | - | - | - | - | - | - | - | - |
| Polyester B3 | - | - | - | 94,4 | 94,4 | 94,4 | 94,4 | 94,4 | 94,4 | 94,4 | 94,4 |
| Aromatisches Amin C1 | 8 | 8 | 8 | 5 | 5 | 5 | 5 | 5 | 5 | 5 | 5 |
| Ammoniumsalz C2 | - | 4 | 4 | - | 4 | - | 4 | - | 4 | - | - |
| Ammoniumsalz C2' | | | | | | | | | | - | 4 |
| Wasser | 0,4 | 0,4 | 0,1 | 0,2 | 0,2 | 0,2 | 0,2 | - | - | 0,2 | 0,2 |
| R134a | - | - | 2 | - | - | - | - | - | - | - | - |
| R365mfc/R227ea (93:7) | - | - | - | - | - | 5 | 5 | 5 | 5 | - | - |
| DABCO | 0,1 | 0,1 | 0,1 | 0,2 | 0,2 | 0,2 | 0,2 | 0,2 | 0,2 | 0,2 | 0,2 |
| DBTDL | 0,05 | 0,05 | 0,05 | - | - | - | - | - | - | - | - |
| Stabilisator | - | - | - | 0,2 | 0,2 | 0,2 | 0,2 | 0,2 | 0,2 | 0,2 | 0,2 |
| Polyisocyanat A1 | 40 | 40 | 35 | - | - | - | - | - | - | - | - |
| Polyisocyanat A2 | - | - | - | 37 | 37 | 37 | 37 | 32 | 32 | 37 | 37 |

| | | | | | | | | | | | |
|---|---|---|---|---|---|---|---|---|---|---|---|
| (V) =Vergleichsbeispiel; * = erfindungsgemäßes Beispiel | | | | | | | | | | | |

Alle Angaben sind in Gew.-Teilen.

**Tabelle 2.**

| | 1(V) | 2* | 3* | 4(V) | 5* | 6(V) | 7* | 8(V) | 9* | 10(V) | 11* |
|---|---|---|---|---|---|---|---|---|---|---|---|
| Startzeit [sec] | 13 | 19 | 12 | 15 | 18 | 13 | 15 | 20 | 20 | 15 | 25 |
| Abbindezeit [sec] | 13 | 19 | 20 | 15 | 20 | 15 | 15 | 20 | 40 | 15 | 40 |
| freie Rohdichte [kg/m³] | 800 | 500 | 400 | 1000 | 560 | 680 | 380 | 860 | 480 | 970 | 670 |
| Formschaumdichte [kg/m³] | | | 650 | | | | 650 | | | | |
| Shore A Härte | | | 60 | | | | 60 | | | | |

Aus den Beispielen 1, 4, 6, 8 und 10 geht hervor, dass Wasser bzw. Wasser/-Treibmittel-Gemische in diesen Formulierungen nur einen geringen Beitrag zur Rohdichte liefern. Erst der Einsatz der erfindungsgemäßen Kombination aus aromatischen Aminen und quaternären Ammoniumsalzen führt zur Bildung von CO₂ bzw. zum Schäumen, was in der Absenkung der Rohdichte ersichtlich ist, und ergibt damit eine starke Verbesserung der Treibmittelausbeute.

Besonders deutlich geht dieser Effekt aus Beispiel 5 im Vergleich zu Beispiel 4 hervor. Gegenüber 4 ist in 5 die Rohdichte fast um den Faktor 2 abgesenkt. Überraschend ist auch, dass in Beispiel 9 eine wesentlich bessere Treibmittelausbeute bei Einsatz von physikalischem Treibmittel als in Beispiel 8 erzielt wird. Auch in Beispiel 9 wird die Rohdichte gegenüber Beispiel 8 fast um den Faktor 2 abgesenkt.

## Patentansprüche

1. Zellige, aminvernetzte Polyurethanelastomere erhältlich durch Umsetzung von
A) einer oder mehreren Verbindungen aus der Gruppe bestehend aus Polyisocyanaten, Polyisocyanatprepolymeren und modifizierten Polyisocyanaten
B) einem oder mehreren Polyolen aus der Gruppe bestehend aus Polyether- und Polyesterpolyolen,
C) Kettenverlängerern
in Gegenwart von
D) Wasser und/oder physikalischen Treibmitteln,
E) Katalysatoren und
F) gegebenenfalls zusätzlichen Hilfs- und/oder Zusatzstoffen,
wobei die Komponente C) ein Gemisch aus (C1) aromatischen Aminen mit mindestens zwei primären Aminogruppen pro Molekül, (C2) quaternären Ammoniumsalzen und gegebenenfalls (C3) kurzkettigen Diolen mit Molekulargewichten von ≤ 400 g/mol ist.

2. Verfahren zur Herstellung von zelligen, aminvernetzten Polyurethanelastomeren, wobei
A) eine oder mehrere Verbindungen aus der Gruppe bestehend aus Polyisocyanaten, Polyisocyanatprepolymeren und modifizierten Polyisocyanaten, mit
B) einer oder mehreren Verbindungen aus der Gruppe besehend aus Polyether- und Polyesterpolyolen und
C) Kettenverlängerern,
in Gegenwart von
D) Wasser und/oder physikalischen Treibmitteln,
E) Katalysatoren und
F) gegebenenfalls zusätzlichen Hilfs- und/oder Zusatzstoffen,
umgesetzt werden, **dadurch gekennzeichnet, dass** die Komponente C) aus aromatischen Aminen mit mindestens 2 primären Aminogruppen pro Molekül (C1), quaternären Ammoniumsalzen (C2) und gegebenenfalls kurzkettigen Diolen mit Molekulargewichten von ≤ 400 (C3) besteht.

3. Verwendung der Elastomeren gemäß Anspruch 1 und der nach Anspruch 2 hergestellten Elastomeren zur Herstellung von Schuhteilen und Schuhsohlen.

## Claims

1. Cellular amine-crosslinked polyurethane elastomers obtainable by the reaction of
A) one or more compounds from the group comprising polyisocyanates, polyisocyanate prepolymers and modified polyisocyanates,
B) one or more polyols from the group comprising polyetherpolyols and polyesterpolyols,
C) chain-extenders,
in the presence of
D) water and/or physical blowing agents,
E) catalysts and
F) optionally additional auxiliary substances and/or additives,
wherein component C) is a mixture of (C1) aromatic amines with at least two primary amine groups per molecule, (C2) quaternary ammonium salts and optionally (C3) short-chain diols with molecular weights of ≤ 400 g/mol.

2. A process for preparing cellular amine-crosslinked polyurethane elastomers, wherein
A) one or more compounds from the group comprising polyisocyanates, polyisocyanate prepolymers and modified polyisocyanates,
are reacted with
B) one or more compounds from the group comprising polyetherpolyols and polyesterpolyols and
C) chain-extenders,
in the presence of
D) water and/or physical blowing agents,
E) catalysts and
F) optionally additional auxiliary substances and/or additives,
**characterised in that** component C) consists of a mixture of aromatic amines with at least 2 primary amine groups per molecule (C1), quaternary ammonium salts (C2) and optionally short-chain diols with molecular weights of ≤ 400 (C3).

3. Use of the elastomers in accordance with claim 1 and prepared according to claim 2 to produce parts of shoes and soles of shoes.

## Revendications

1. Elastomères de polyuréthane amine-réticulés, alvéolaires obtenus par réaction de
A) un ou plusieurs composés choisis parmi des polyisocyanates, des prépolymères de polyisocyanates et des polyisocyanates modifiés
B) un ou plusieurs polyols choisis parmi des polyéther et polyester polyols
C) des agents d'allongements de chaîne
en présence
D) d'eau et/ou d'agents propulseurs physiques
E) de catalyseurs et
F) éventuellement d'additifs et d'auxiliaires supplémentaires,
le constituant C) étant un mélange constitué (C1) d'amines aromatiques avec au moins deux groupes amino primaires par molécule, (C2) de sels d'ammonium quarternaire et éventuellement (C3) de diols à chaîne courte avec des poids moléculaires ≤ 400g/mol.

2. Procédé pour la préparation d'élastomères de polyuréthane amine-réticulés alvéolaires, dans lequel
A) un ou plusieurs composés choisis parmi des polyisocyanates, des prépolymères de polyisocyanates et des polyisocyanates modifiés
B) un ou plusieurs polyols choisis parmi des polyéther et polyester polyols
C) des agents d'allongements de chaîne
réagissent en présence
D) d'eau et/ou d'agents propulseurs physiques
E) de catalyseurs et
G) éventuellement d'additifs et d'auxiliaires supplémentaires,
**caractérisé en ce que** le constituant C) est un mélange constitué d'amines aromatiques avec au moins deux groupes amino primaires par molécule (C1), de sels d'ammonium quarternaire (C2) et éventuellement de diols à chaîne courte avec des poids moléculaires ≤ 400g/mol (C3).

3. Utilisation des élastomères selon la revendication 1 et des élastomères préparés selon la revendication 2 pour la préparation de pièces de chaussures et de semelles de chaussures.
